# EUROPÄISCHE PATENTANMELDUNG

(11) **EP 2 975 101 A1**
(43) Veröffentlichungstag der Anmeldung: **20.01.2016**
(21) Anmeldenummer: 15176277.0
(22) Anmeldetag: 10.07.2015
(51) Int. Cl.: C10L 5/36, C10L 5/44

(54) **BRENNMITTEL FÜR EINE WÄRMEERZEUGENDE EINRICHTUNG**

(30) Priorität: 17.07.2014 CH 10842014
(71) Anmelder: swissphlox gmbh, 3703 Aeschi b. Spiez (CH)
(72) Erfinder: Wäfler, Stefan, 3703 Aeschi bei Spiez (CH); Mann, Samuel, 3600 Thun (CH)
(74) Vertreter: BOVARD AG

(57) **Zusammenfassung**

Ein Brennmittel (1) für eine wärmeerzeugende Einrichtung besteht aus Brennstoffkörpern (3), die aus einem brennbaren Material, insbesondere biogenem Material durch Pressen gebildet sind. Diese Brennstoffkörper (3) sind über ein im Wesentlichen längsstabiles Längselement (4), das biegsam ist, miteinander verbunden und bilden eine Reihe (5). Ein derartig ausgebildetes Brennmittel (1) kann in einfacher Weise dem Brennraum einer wärmeerzeugenden Einrichtung zugeführt werden, der Transport und die Lagerung dieses Brennmittels (1) sind in optimaler Weise möglich.

## Beschreibung

Die vorliegende Erfindung bezieht sich auf ein Brennmittel für eine wärmeerzeugende Einrichtung, bestehend aus Brennstoffkörpern, die aus einem brennbaren Material, insbesondere biogenem Material, durch Pressen gebildet sind und dem Brennraum einer wärmeerzeugenden Einrichtung zuführbar sind.

Derartige Brennmittel sind in vielfältiger Weise bekannt. Insbesondere bekannt sind Pellets, die aus Holzabfällen oder Holz hergestellt werden, wobei das Ausgangsmaterial gegebenenfalls zerkleinert und erforderlichenfalls getrocknet wird. Das vorbereitete Material wird in Stränge gepresst und auf die gewünschte Länge geschnitten. Dadurch entstehen die einzelnen Pelletsstücke, die einen Durchmesser von einigen Millimetern und eine Länge von einigen Zentimetern haben können.

Diese Pellets können als schüttfähiges Gut in geeigneten Behältern und mittels Vorrichtungen transportiert und gelagert werden. Aus in der Nähe der wärmeerzeugenden Einrichtung angeordneten Behältern kann das schüttfähige Gut gesteuert beispielsweise über Förderschnecken dem Brennraum der wärmeerzeugenden Einrichtung zugeführt werden. Da derartig hergestellte Pellets sehr kompakt sind und ein Auseinanderbrechen dieser Pellets nicht wahrscheinlich ist, wodurch Störungen, beispielsweise Verstopfungen im Bereich der Förderstrecken für diese Pellets auftreten könnten, ist ein störungsfreier Betrieb im Wesentlichen gewährleistet.

Bei andersartigen biogenen Materialien, die auch der Wärmegewinnung dienen und verbrannt werden können, zum Beispiel Pferdemist oder ähnliche Materialien, ist die Herstellung von Pellets nur mit einem entsprechend grossen Aufwand möglich, was aber unwirtschaftlich wäre. Derartige biogene Massen werden deshalb beispielsweise gepresst und in die Form von Briketts gebracht. Derartige Bricketts müssen wegen der Grösse als Einzelstücke gehandhabt werden, was das Transportieren, Lagern und die Zuführung in die Brennräume von wärmeerzeugenden Einrichtungen komplizierter und somit aufwändiger macht.

Die Aufgabe der Erfindung besteht darin, Brennmittel für eine wärmeerzeugende Einrichtung, bestehend aus Brennstoffkörpern, die aus einem brennbaren Material, insbesondere biogenem Material, durch Pressen gebildet sind und dem Brennraum einer wärmeerzeugenden Einrichtung zuführbar sind, zu schaffen, welche in einfacher Weise transportiert, gelagert und dem Brennraum zugeführt werden können.

Erfindungsgemäss erfolgt die Lösung dieser Aufgabe dadurch, dass die Brennstoffkörper über ein im Wesentlichen längsstabiles Längselement, das biegsam ist, miteinander verbunden sind und eine Reihe bilden.

Die derartig miteinander verbundenen Brennstoffkörper können dadurch kontinuierlich dem Brennraum einer wärmeerzeugenden Einrichtung zugeführt werden. Die Zuführung kann mittels eines Zugelementes erfolgen, mit welchem die Brennstoffkörper beispielsweise durch ein Zuführrohr von einem Vorratsbehälter in den Brennraum gezogen werden. Störungen bei der Zuführung der Brennstoffkörper in den Brennraum beispielsweise durch Verstopfung, wie dies beispielsweise bei Pellets vorkommen kann, können praktisch ausgeschlossen werden, selbst bei Materialien, die üblicherweise problematisch sind, wie beispielsweise Pferdemist.

In vorteilhafter Weise ist das längsstabile Element aus einem brennbaren Material gebildet. Dadurch erhält man eine vollständige Verbrennung der miteinander verbundenen Brennstoffkörper, was eine einfache Handhabung ergibt.

Das längsstabile Element kann aber auch aus einem nicht brennbaren, wiederverwertbaren Material gebildet sein. Hiermit kann das längsstabile Element mit den daran angebrachten Brennstoffkörpern durch den Brennraum gezogen werden, in welchem die Brennstoffkörper verbrennen und vom längsstabilen Element abgelöst werden. Mit dieser Ausgestaltung erhält man eine einfache Zuführung der Brennstoffkörper in den Brennraum, das längsstabile Element kann wiederverwendet werden.

In vorteilhafter Weise können die aus dem brennbaren Material gebildeten Brennstoffkörper auf das längsstabile Längselement aufgepresst werden, was einen einfachen Herstellungsvorgang ergibt.

In vorteilhafter Weise sind die aus brennbarem Material gebildeten Brennstoffkörper in mehreren Schichten auf das längsstabile Längselement aufgepresst. Einerseits kann dadurch die Festigkeit der Brennstoffkörper verbessert werden, was ein verbessertes Halten am längsstabilen Längselement zur Folge hat, andererseits kann dadurch das Abbrennen der Brennstoffkörper optimiert werden.

Eine weitere vorteilhafte Ausgestaltung der Erfindung besteht darin, dass auf dem längsstabilen Längselement Kernkörper angeordnet sind, um welche die Brennstoffkörper angebracht sind. Damit wird erreicht, dass die Brennstoffkörper auf dem längsstabilen Längselement fixiert sind und ein Verschieben nicht möglich wird.

Die Kernkörper können aus einem brennbaren Material gebildet sein, sie können aber auch aus einem nicht brennbaren Material bestehen, je nach dem, ob das längsstabile Längselement in gleicher Weise wiederverwendet werden soll oder nicht.

In vorteilhafter Weise bildet das längsstabile Längselement mit den darauf angebrachten Brennstoffkörpern eine geschlossene Schlaufe und nimmt die Form eines Rings ein. Mit dieser Ausgestaltung kann ein ringförmiger Brennkörper geschaffen werden, der in optimaler Weise in einen ringförmigen Brennraum einer wärmeerzeugenden Einrichtung eingesetzt werden kann.

Das längsstabile Längselement mit den darauf aufgesetzten Brennstoffkörpern kann für den Transport und die Lagerung zu Wickelrollen aufgewickelt sein, durch das Abwickeln erhält man eine optimale Zuführung zu dem entsprechenden Brennraum.

Das längsstabile Längselement mit den darauf aufgesetzten Brennstoffkörpern kann aber auch schlaufenförmig und mehrlagig in Behältern untergebracht sein, auch hiermit ist ein optimales Handling gewährleistet.

Die Erfindung wird nachfolgend anhand der beiliegenden Zeichnung beispielhaft näher erläutert.

Es zeigt
Fig. 1 in räumlicher Darstellung das Brennmittel mit den Brennstoffkörpern, die auf ein längsstabiles Längselement aufgesetzt sind, zum Teil im Schnitt;
Fig. 2 schematisch und im Schnitt eine wärmeerzeugende Einrichtung mit einer Zuführeinrichtung für die auf dem längsstabilen Längselement aufgesetzten Brennstoffkörper;
Fig. 3 schematisch die Zuführeinrichtung gemäss Fig. 2 mit Schleuse für die auf dem längsstabilen Längselement aufgesetzten Brennstoffkörper; und
Fig. 4 schematisch eine Einrichtung zum Teilen der auf dem längsstabilen Längselement aufgesetzten Brennstoffkörper für getrennte Brennräume.

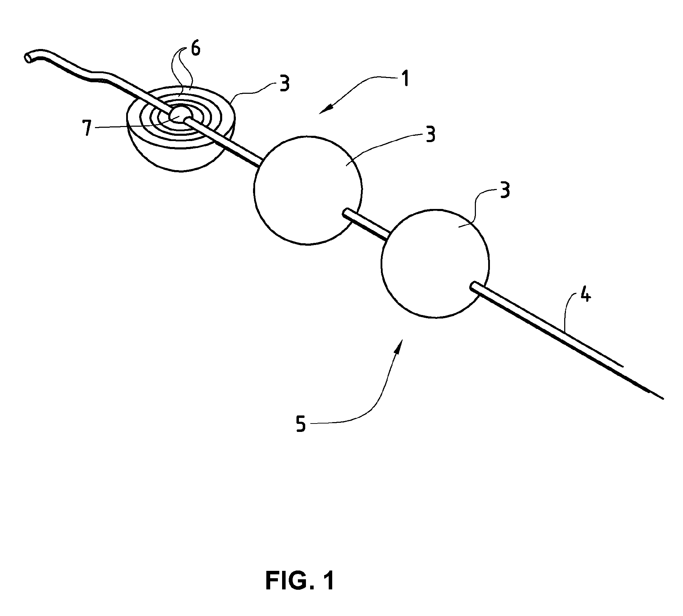

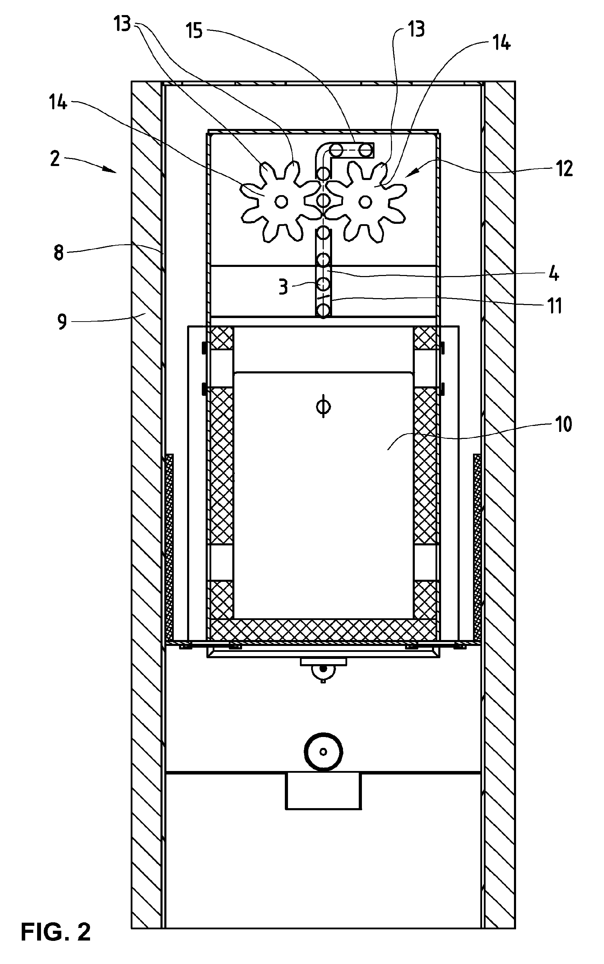

Aus Figur 1 ist das erfindungsgemässe Brennmittel 1 ersichtlich, wie es einer wärmeerzeugenden Einrichtung 2 (Figur 2) zugeführt werden kann. Dieses Brennmittel 1, besteht aus einzelnen Brennstoffkörpern 3, die aus einem brennbaren Material, insbesondere biogenen Material, gebildet werden. Diese Brennstoffkörper 3 sind über ein längsstabiles Längselement 4, das biegsam ist, miteinander verbunden und bilden so eine Reihe 5.

Die Brennstoffkörper 3 können beispielsweise durch Verpressen von brennbarem Material, insbesondere biogenen Material gebildet werden. Hierbei kann während des Pressvorgangs das längsstabile Längselement 4 eingeführt werden, der Brennstoffkörper 3 wird somit um das längsstabile Längselement 4 aufgepresst.

Grundsätzlich ist jedes brennbare Material und insbesondere biogene Material, das zu Brennstoffkörpern verpresst werden kann, anwendbar. Das Material kann beispielsweise vor dem Verpressen zerkleinert werden, es kann beispielsweise auch durch Trocknung auf den erwünschten Feuchtegrad gebracht werden, das Material kann so vorbereitet werden, damit es sich in optimaler Weise zu Brennstoffkörpern verpressen lässt. Die Form der Brennstoffkörper 3 kann im Prinzip beliebig sein, im hier dargestellten Ausführungsbeispiel ist die Form der Brennstoffkörper 3 kugelförmig, bei der Auswahl der Form spielt die Möglichkeit der Verpressbarkeit des Materials eine Rolle, wie auch die mögliche Ausgestaltung der entsprechenden Presse. Für die Grösse der Brennstoffkörper 3 ist neben den vorgängig beschriebenen Möglichkeiten auch die Einsatzart entscheidend, beispielsweise auch die Grösse der wärmeerzeugenden Einrichtung.

Wie vorgängig beschrieben worden ist, kann als brennbares Material insbesondere biogenes Material verwendet werden, hierbei können auch Materialien verarbeitet werden, deren Verarbeitung bis anhin eher als schwierig eingestuft wurden, worunter beispielsweise auch Pferdemist fällt.

Das in Figur 1 ersichtliche längsstabile Längselement 4, das in jede Richtung biegsam ist, kann beispielsweise aus einem nicht brennbaren Material bestehen. Geeignet hierzu wäre beispielsweise ein metallischer Draht oder ein Drahtseil, geeignet wäre auch ein kettenartiges Element. Wenn das längsstabile Längselement 4 aus einem nicht brennbaren Material gebildet wird, kann dieses, nachdem es durch die wärmeerzeugende Einrichtung hindurchgeführt wurde, wie später noch beschrieben wird, und die Brennstoffkörper 3, die sich auf dem längsstabilen Längselement 4 befanden, abgebrannt sind, wiederverwendet werden. Das biegsame längsstabile Längselement 4 kann aber auch aus einem brennbaren Material gebildet werden, beispielsweise einer geeigneten Schnurr, welche dann zusammen mit den Brennstoffkörpern 3 in der wärmeerzeugenden Einrichtung verbrannt wird.

Das längsstabile Längselement 4 kann beispielsweise auch mit brandbeschleunigenden Mitteln versehen sein, welche das Anbrennen der Brennstoffkörper 3 auf diesem längsstabilen Längselement 4 verbessert.

Wie aus Figur 1 ersichtlich ist, können die Brennstoffkörper 3, die auf das längsstabile Längselement 4 aufgesetzt sind, aus mehreren Schichten 6 zusammengesetzt sein. Dies kann beispielsweise bei der Herstellung der Brennstoffkörper 3 vorteilhaft sein, die einzelnen Schichten 6 können beispielsweise auch eine andere Zusammensetzung oder Konsistenz aufweisen, die einen speziellen Abbrand des Brennstoffkörpers 3 ermöglichen, wodurch vielfältige Effekte erzielt werden können.

Um zu vermeiden, dass sich die Brennstoffkörper 3, die auf das längsstabile Längselement 4 aufgepresst sind, entlang dieses längsstabilen Längselementes 4 verschieben können, sind auf dem längsstabilen Längselement 4 Kernkörper 7 angeordnet. Diese Kernkörper 7 bilden insbesondere eine Verdickung auf dem längsstabilen Längselement 4, sie können von beliebiger Form sein, beispielsweise kugelförmig, wie dies in Figur 1 dargestellt ist. Diese Kernkörper 7 sind so ausgebildet, dass sie eine gute Verbindung mit dem längsstabilen Längselement 4 haben. Diese Kernkörper 7 können aus einem brennbaren Material bestehen, insbesondere dann, wenn das längsstabile Längselement 4 ebenfalls aus einem brennbaren Material gebildet ist, wodurch man eine vollständige Verbrennung erhält, die Kernkörper 7 können aber auch aus einem nicht brennbaren Material bestehen, insbesondere wenn das längsstabile Längselement 4 aus einem nicht brennbaren Material besteht und eine Wiederverwendbarkeit erwünscht ist. Bei einem längsstabilen Längselement 4, dass aus einem nicht brennbaren Material besteht, können aber die Kernkörper 7 ebenfalls aus einem brennbaren Material gebildet sein, die bei der Verbrennung der Brennstoffkörper 3 ebenfalls mitverbrennen.

Das längsstabile Längselement 4 mit den darauf angeordneten Brennstoffkörpern 3, wie dies in Figur 1 dargestellt ist, kann beispielsweise als Wickel auf eine Spule aufgewickelt werden, eine derartige Spule kann in einfacher Weise transportiert werden, eine derartige Spule kann auch als Speicher dienen, von welchem die Brennstoffkörper, die in der entsprechenden wärmeerzeugenden Einrichtung verbrannt werden sollen, abgezogen werden können. Das längsstabile Längselement 4 mit den darauf angebrachten Brennstoffkörpern 3 kann aber auch schlaufenförmig in einem Behälter untergebracht werden, aus welchem die Brennstoffkörper ebenfalls zum Einführen in eine wärmeerzeugende Einrichtung bezogen werden können. Selbstverständlich sind auch andere geeignete Möglichkeiten denkbar.

Das längsstabile Längselement 4 mit den darauf angebrachten Brennstoffkörpern 3 kann aber auch jeweils in die Form eines Rings gebracht werden, derartige ringförmige Brennelemente können beispielsweise in wärmeerzeugende Einrichtungen eingebracht werden, die einen entsprechenden ringförmigen Brennraum aufweisen.

Aus Figur 2 ist eine wärmeerzeugende Einrichtung 2 ersichtlich, die einen Rahmen 8 aufweist, der in bekannter Weise mit wärmespeichernden Materialschichten 9 umgeben ist. In diesen Rahmen 8 ist in bekannter Weise ein Brennraum 10 eingesetzt, der in bekannter, nicht dargestellter Weise Zuführkanäle für Frischluft und Wegführkanäle für das Rauchgas aufweist. In den Brennraum 10 mündet ein Zuführrohr 11, durch welches die auf dem längsstabilen Längselement 4 angebrachten Brennstoffkörper 3 in den Brennraum 10 eingeschoben werden. Das Zuführen der Brennstoffkörper 3 erfolgt über eine Antriebseinrichtung 12, die im hier dargestellten Ausführungsbeispiel mit Zähnen 13 versehenen Rädern 14 besteht, welche in bekannter, nicht dargestellter Weise rotierend angetrieben werden können, wodurch über die Zähne 13 die Brennstoffkörper 3 mit dem längsstabilen Längselement 4 in das Zuführrohr 11 und somit in den Brennraum 10 der wärmeerzeugenden Einrichtung 2 kontinuierlich oder taktweise eingeschoben werden können. Selbstverständlich wären auch anders ausgestaltete Antriebseinrichtungen, die den gleichen Zweck erfüllen, denkbar.

Das längsstabile Längselement 4 mit den darauf angebrachten Brennstoffkörpern 3 wird über die Antriebseinrichtung 12 aus einem weiteren Zuführrohr 15 gezogen, über welches das längsstabile Längselement 4 mit den daran angebrachten Brennstoffkörpern 3 aus dem entsprechenden Lager (z.B. Wickel oder Behälter) entnommen wird.

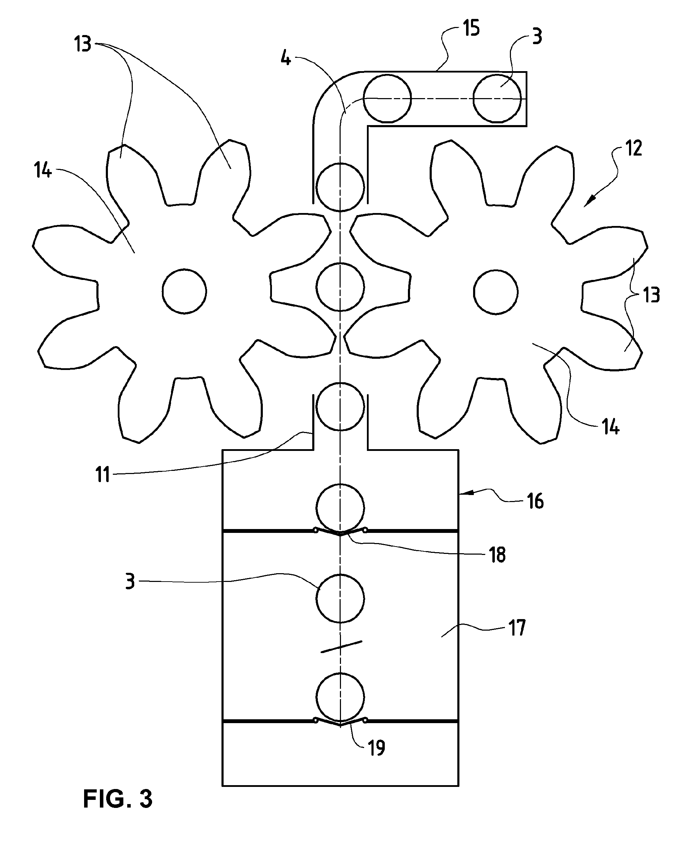

Aus Figur 3 ist in vergrösserter Darstellung die Antriebseinrichtung 12 ersichtlich, wie sie zu Figur 2 beschrieben worden ist. Im hier dargestellten Ausführungsbeispiel ist im Zuführrohr 11 eine Schleuse 16 angebracht, die einen Schleusenraum 17 aufweist, der durch obere und untere Klappen 18 bzw. 19 verschliessbar ist. Beim Durchlaufen der oberen und unteren Klappen 18 bzw. 19 durch die Brennstoffkörper 3 werden diese Klappen in bekannter Weise geöffnet und wieder geschlossen. Dadurch wird vermieden, dass aus dem Brennraum 10 (Figur 2) Brenngas über das Zuführrohr 11 in die Umgebung austreten kann.

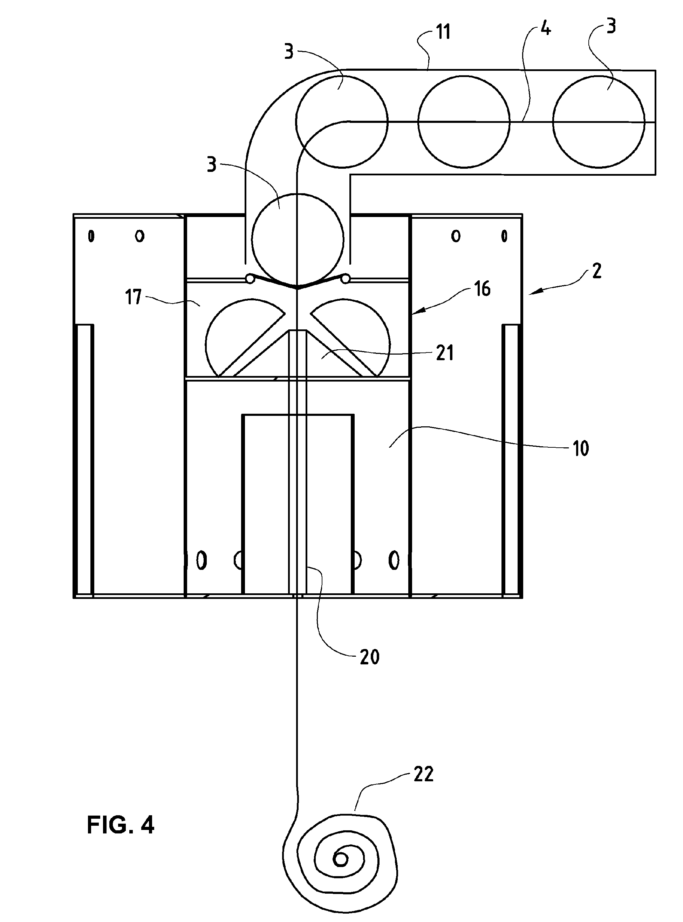

Figur 4 zeigt in schematischer Darstellung eine wärmeerzeugende Einrichtung 2, in welcher der Brennraum 10 ringförmig angeordnet ist. Die Zuführung des längsstabilen Längselementes 4 mit den daran angebrachten Brennstoffkörpern 3 erfolgt wiederum über das Zuführrohr 11. Im hier dargestellten Ausführungsbeispiel ist das längsstabile Längselement 4 aus einem nicht brennbaren Material gebildet, welches durch ein zentrales Rohr 20 durch den Brennraum 10 hindurchgeführt wird. Das längsstabile Längselement wird 4 in bekannter Weise in einer Wickelvorrichtung 22 aufgewickelt. Im Schleusenraum 17 der Schleuse 16 ist ein Keil 21 angeordnet, mittels welchem die Brennstoffkörper 3 zweigeteilt und vom längsstabilen Längselement 4 gelöst werden, die beiden Teile des Brennstoffkörpers 3 fallen somit auf zwei gegenüberliegende Seiten des Brennraums 10, wodurch eine optimale Verbrennung im Brennraum 10 erreicht wird.

Mit auf einem längsstabilen Längselement angebrachten Brennstoffkörpern wird ein Brennmittel erhalten, das vielfältig eingesetzt werden kann, dessen Handhabung optimal ist und das aus unterschiedlichsten brennbaren Materialien, insbesondere biogenen Materialien, hergestellt werden kann. Ein derartiges Brennmittel kann auch in unterschiedlichsten wärmeerzeugenden Einrichtungen eingesetzt werden, insbesondere die automatische Beschickung derartiger wärmeerzeugender Einrichtungen mit diesem Brennmittel ist in einfacher Weise möglich.

## Patentansprüche

1. Brennmittel für eine wärmeerzeugende Einrichtung (2), bestehend aus Brennstoffkörpern (3), die aus einem brennbaren Material, insbesondere biogenem Material, durch Pressen gebildet sind und dem Brennraum (10) einer wärmeerzeugenden Einrichtung (2) zuführbar sind, **dadurch gekennzeichnet, dass** die Brennstoffkörper (3) über ein im wesentlichen längsstabiles Längselement (4), das biegsam ist, miteinander verbunden sind und eine Reihe (5) bilden.

2. Brennmittel für eine wärmeerzeugende Einrichtung (2) nach Anspruch 1, **dadurch gekennzeichnet, dass** das längsstabile Element (4) aus einem brennbaren Material gebildet ist.

3. Brennmittel für eine wärmeerzeugende Einrichtung (2) nach Anspruch 1, **dadurch gekennzeichnet, dass** das längsstabile Element (4) aus einem nicht brennbaren, wiederverwertbaren Material gebildet ist.

4. Brennmittel für eine wärmeerzeugende Einrichtung (2) nach einem der Ansprüche 1 bis 3, **dadurch gekennzeichnet, dass** die aus dem brennbaren Material gebildeten Brennstoffkörper (3) auf das längsstabile Längselement (4) aufgepresst sind.

5. Brennmittel für eine wärmeerzeugende Einrichtung (2) nach einem der Ansprüche 1 bis 4, **dadurch gekennzeichnet, dass** die aus brennbaren Material gebildeten Brennstoffkörper (3) in mehreren Schichten (6) auf das längsstabile Längselement (4) aufgepresst sind.

6. Brennmittel für eine wärmeerzeugende Einrichtung (2) nach einem der Ansprüche 1 bis 5, **dadurch gekennzeichnet, dass** auf dem längsstabilen Längselement (4) Kernkörper (7) angeordnet sind, um welche die Brennstoffkörper (3) angebracht sind.

7. Brennmittel für eine wärmeerzeugende Einrichtung (2) nach Anspruch 6, **dadurch gekennzeichnet, dass** die Kernkörper (7) aus einem brennbaren Material gebildet sind.

8. Brennmittel für eine wärmeerzeugende Einrichtung (2) nach Anspruch 6, **dadurch gekennzeichnet, dass** die Kernkörper (7) aus einem nicht brennbaren Material bestehen.

9. Brennmittel für eine wärmeerzeugende Einrichtung (2) nach einem der Ansprüche 1 bis 8, **dadurch gekennzeichnet, dass** das längsstabile Längselement (4) mit den darauf angebrachten Brennstoffkörpern (3) eine geschlossene Schlaufe bildet und die Form eines Rings einnimmt.

10. Brennmittel für eine wärmeerzeugende Einrichtung (2) nach einem der Ansprüche 1 bis 8, **dadurch gekennzeichnet, dass** das längsstabile Längselement (4) mit den darauf aufgesetzten Brennstoffkörpern (3) zu Wickelrollen aufgewickelt sind.

11. Brennmittel für eine wärmeerzeugende Einrichtung (2) nach einem der Ansprüche 1 bis 8, **dadurch gekennzeichnet, dass** das längsstabile Längselement (4) mit den darauf aufgesetzten Brennstoffkörpern (3) schlaufenförmig und mehrlagig in Behältern unterbringbar ist.
